# EUROPEAN PATENT SPECIFICATION

(11) **EP 4 197 814 B1**
(45) Date of publication and mention of the grant of the patent: **02.07.2025**
(21) Application number: 22213039.5
(22) Date of filing: 13.12.2022
(51) Int. Cl.: B60C 9/20, B60C 9/26, B60C 9/22, B60C 9/18

(54) **TRUCK TIRE**
LASTWAGENREIFEN
PNEU DE CAMION

(30) Priority: 16.12.2021 US 202163265534 P; 28.11.2022 US 202218059012
(43) Date of publication of application: 21.06.2023
(73) Proprietor: The Goodyear Tire & Rubber Company, Akron, OH 44316 (US)
(72) Inventor: PASSANTE SPACCAPIETRA, Ettore, L-9070 Ettelbruck (LU); JOUBERT, Paul Benoit, L-2714 Luxembourg (LU); KRIER, Roland Willibrord, L-6622 Wasserbillig (LU); MANOGARAN, Arun Prasath, L-7740 Colmar-Berg (LU); CAMBRON, Anne-France Gabrielle Jeanne-Marie, L-7562 Mersch (LU); SAAVEDRA, Kevin Rafael, L-7256 Walferdange (LU)
(74) Representative: Kutsch, Bernd

(56) References cited:
- EP-A1- 1 787 825
- EP-A1- 2 481 612
- EP-A1- 4 140 766
- EP-A1- 4 140 767
- JP-A- 2002 192 908
- JP-A- 2005 212 742
- KR-A- 20130 077 412
- US-A1- 2017 197 468

## Description

### Field of the Invention

The invention relates in general to pneumatic tires, and more particularly for vehicles such as trucks.

### Background of the Invention

The commercial truck market is moving towards an increase in overall vehicle weight, which is due in part to the increase in weight of the motor and equipment. The increase in overall vehicle weight requires a tire capable of handling the additional loading. Thus, a tire with improved crown durability and increased load carrying capacity is desired.

JP 2002 192 908 A describes an aircraft tire having radially outer belt plies radially inward of the tread with a cord angle in a range of 10° to 35° and located over zigzag belt plies. Additionally, there are two interposition rubbers disposed under at the respective axially outer end of the radially innermost zigzag belt ply.

US 2017/197468 A1, EP 1 787 825 A1, EP 2 481 612 A1, KR 2013 0077412 A, and JP 2005 212742 A describe tires having a belt structure radially inward of the tread, the belt structure comprising a first and second working belt. Such tires are also known from EP 4 140 766 A1 and EP 4 140 767 A1, which have been published only after the priority date of this application.

### Summary of the Invention

The invention relates to a tire in accordance with claim 1.

Dependent claims refer to preferred embodiments of the invention.

In one preferred aspect, the invention provides in a pneumatic tire for use on trucks, the tire having a tread, sidewalls, and a pair of beads, and a belt reinforcement structure located radially inward of the tread, the belt structure wherein the first working belt is located radially inward of the second working belt, wherein the angle of the first and second working belts range from 10 degrees to 50 degrees from the circumferential direction, wherein a zigzag belt is located radially inward of the first working belt, and wherein a rubber spacer layer is located between the zigzag belt and a carcass of the tire.

In another preferred aspect, the invention provides a pneumatic tire for use on trucks, the tire having a tread, sidewalls, and a pair of beads, and a belt reinforcement structure located radially inward of the tread, the belt structure wherein the first working belt is located radially inward of the second working belt, wherein the angle of the first and second working belts range from 10 degrees to 50 degrees from the circumferential direction, wherein a zigzag belt is located between the first working belt and the second working belt, and wherein a rubber spacer layer is located between the first working belt and a carcass of the tire.

### Definitions

"Aspect Ratio" means the ratio of a tire's section height to its section width.

"Axial" and "axially" mean the lines or directions that are parallel to the axis of rotation of the tire.

"Belt Structure" or "Reinforcing Belts" means at least two annular layers or plies of parallel cords, woven or unwoven, underlying the tread, unanchored to the bead.

"Breakers" or "Tire Breakers" means the same as belt or belt structure or reinforcement belts.

"Circumferential" means lines or directions perpendicular to the axial direction or perpendicular within +/- 5 degrees to the axial direction.

"Cord" means one of the reinforcement strands, including fibers or wires, which are used to reinforce plies.

"Extensible" means a cord, cable or wire having a relative elongation of greater than 0.2% at 10% of the breaking load, when measured from a cord, cable or wire extracted from a cured tire. The tensile measurements such as the load at break (maximum load in N), strength at break (in MPa) and elongation at break (total elongation in %) are performed in tension in accordance with ISO 6892-1B (2019) at a pre-load no more than 10 MPa tested on a cord, cable or wire when taken from a cured tire.

"Ply" means a cord-reinforced layer of elastomer-coated, radially deployed or otherwise parallel cords.

"Radial" and "radially" mean directions radially toward or away from the axis of rotation of the tire.

### Brief Description of the Drawings

The invention will be described by way of example and with reference to the accompanying drawings in which:
FIG. 1A and FIG. 1B are cross-sectional views of a first embodiment of a tire of the present invention;
FIG. 2A and FIG. 2B are cross-sectional views of a second embodiment of a tire of the present invention; and
FIG. 3 is a cross-sectional view of a comparative example of a tire.

### Detailed Description of Preferred Embodiments of the Invention

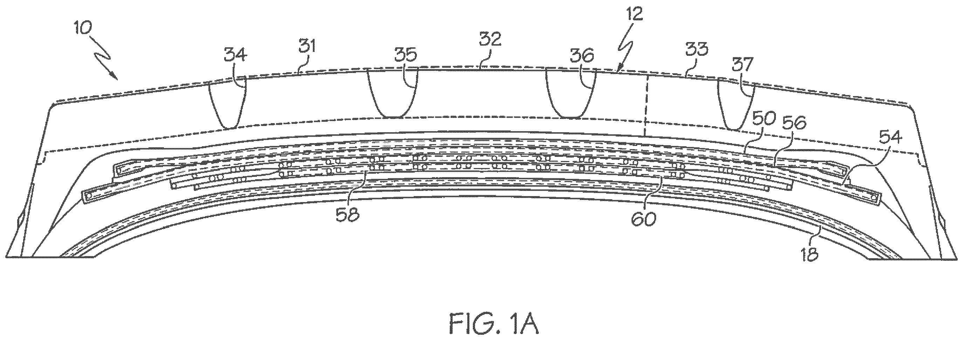

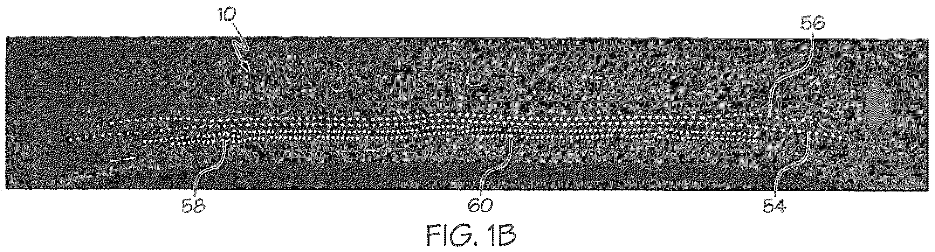

FIG. 1A and FIG. 1B illustrate a first embodiment of a pneumatic tire, suitable for use as a truck tire. The tire 10 has a tread 12 with a non-skid depth D. The tire tread 12 may comprise a plurality of circumferentially continuous ribs, which may vary, but are shown for example as ribs 31, 32 and 33. Positioned between each rib is a circumferential groove 34, 35, 36, 37 which are preferably continuous. The tread may also comprise optional sipes (not shown). The tread pattern is not limited to same, and may comprise, for example, a plurality of blocks and grooves (not shown).

The tire 10 further includes a belt package 50 which is located between the tread and the one or more plies 18 of the carcass of the tire 10. The ply 18 and the belt reinforcing structure 50 are made from cord reinforced elastomeric material, wherein the cords are preferably steel wire or polyamide filaments and wherein the elastomer is preferably rubber.

The belt reinforcing package 50 includes a pair of extensible working belts, 54, 56. i.e., they are belts comprising parallel extensible cords with the angle of these cords defining the breaker angle. Belt 54 is located radially inwards of belt 56. Belt 54 has a width which is preferably equal or about equal (+/- 5 percent) to the tread arc width of the tire 10. Preferably, belt 54 has a belt width equal or substantially equal (+/- 5 percent) to the tread arc width. The breaker angle of belt 54 is between 10 and 50 degrees, preferably with a right orientation.

Belt 56 is the second member of the working belt pair. Belt 56 has a width less than the width of belt 54 (the other working belt) and is preferably radially outward of belt 54. Preferably, the belt 56 has a width less than the width of belt 54 by a step off, which may range from 10 to 20 mm. Belt 56 has a breaker angle between 10 and 50 degrees, preferably with a left orientation. Preferably, belt 56 has the same breaker angle than belt 54 but an opposite angular orientation as belt 54.

As shown in FIG. 1A and FIG. 1B, the belt structure 50 further comprises a third belt 58 which is in a preferred embodiment located radially inward of the working pair belts 54, 56. In a preferred embodiment, the third belt 58 is a zigzag belt reinforcing structure formed by a reinforcement strip of one or more cords, wherein the reinforcement strip is laid up in an alternating pattern from one lateral end of the tire building drum to a second lateral end of the tire building drum, wherein the reinforcement strip extends at an angle between 5° and 30° between lateral edges. The resulting zigzag belt reinforcing structure preferably results in two layers of cord woven together. The zigzag belt 58 has an axial width less than the axial width of the working belts 56, 58. In one embodiment, the zigzag belt reinforcing structure 58 is formed of or comprises relatively high elongation cord or of extensible cord.

The belt structure 50 further includes a rubber layer 60 located between the zigzag belt reinforcing structure 58 and the tire carcass ply 18. The rubber layer 60 has an axial width which is the same or less than the axial width of the zigzag belt reinforcing structure 58. As shown in FIG. 1B, the rubber layer 60 preferably has a variable gauge (i.e., radial thickness), which ranges from 1.5 mm to 4 mm across the axial width of the rubber layer 60. Preferably, the maximum gauge occurs in the center of the tread 12 and decreases to the lateral belt edge either continuously or stepwise.

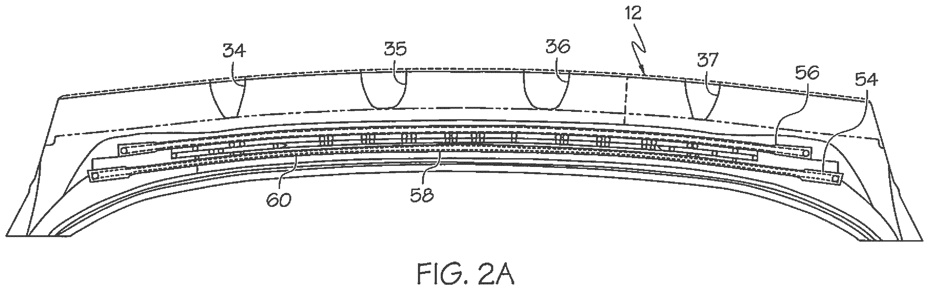

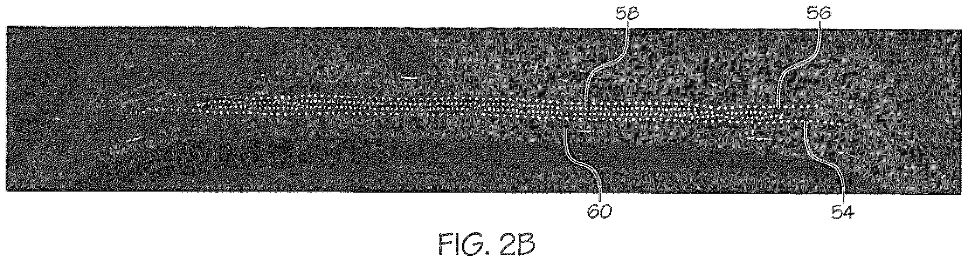

As shown in FIG. 2A and FIG. 2B, the zigzag belt 58 may alternatively also be located between the working belts 54, 56.

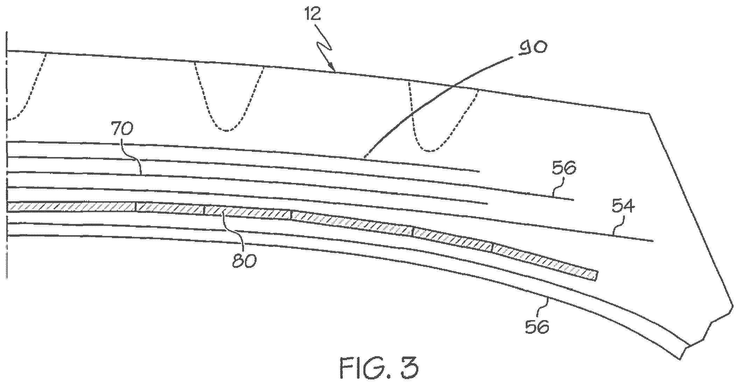

FIG. 3 illustrates a comparative example wherein a third belt 70 is located between the working belts 54, 56 and is a relatively low angle belt 70 with reinforcements that are oriented circumferentially at 5 degrees or less, preferably 0 degrees. The relatively low angle belt 70 is preferably formed from spirally winding a rubberized strip of two or more cords. Alternatively, the belt may be formed of a cut belt with the reinforcements oriented in the range of from 0 to 10 degrees from the circumferential direction. The low angle belt 70 preferably has a width sized to avoid compression in the shoulder area. The belt width of the third belt 58 is preferably in the range of from 70% to 80% of the tread arc width. The relatively low angle belt 70 is preferably formed of relatively high elongation cord or of extensible cord.

Cord or cable or wire is a relatively high elongation cord, cable or wire when it has, under a tensile force equal to 10% of the breaking force, a relative elongation greater than 0.2% or greater than 0.8% or greater than 1.5%, when taken from a cured tire.

Tensile measurements such as the structural elongation (%Ats), elongation at 10% breaking load (%@10%BL), load at break (maximum load in N), strength at break (in MPa) and elongation at break (total elongation in %) are performed in tension in accordance with ISO 6892-1B (2019) at a pre-load no more than 10 MPa tested on a cable or wire when taken from a cured tire.

The belt package 50 further includes a rubber layer 80 located between the carcass ply 18 and the first working belt 54. The rubber layer 80 has an axial width which is less than the width of the first working belt 54. The rubber layer 80 preferably has a variable gauge, which ranges from 1.5 mm to 4 mm across the axial width of the rubber layer 80. Preferably, the maximum gauge occurs in the center of the tread 12 and decreases to the lateral belt edge either continuously or stepwise.

The belt structure 50 may further include an optional overlay belt 90, which is the radially outermost belt of the belt structure 50. Such an optional overlay belt 90 may be applies in any of the embodiments described above.

The aspect ratio of the tire 10 described above may vary. The aspect ratio is preferably in the range of from 50 to 90. The tire preferably has a net to gross ratio in the range of 70 to 90, more preferably in the ratio of 74 to 86, more preferably 78 to 84.

Preferably, the tire 10 is a truck tire and designed for mounting on a 22.5 inch rim (1 inch = 2.54 cm).

## Claims

1. A pneumatic tire for use on trucks, the tire having a tread (12), sidewalls, a carcass a pair of beads, and a belt structure (50) located radially inward of the tread (12), the belt structure (50) comprising a first working belt (54) and a second working belt (56) , the first working belt (54) being located radially inward of the second working belt (56), wherein the angle of the first and second working belts (54, 56) range from 10 degrees to 50 degrees from the circumferential direction, wherein a zigzag belt (58) is located radially inward of the first working belt (54) or between the first working belt (54) and the second working belt (56), wherein a rubber spacer layer (60, 80) is located between the zigzag belt (58) and the carcass of the tire (10) or between the first working belt (54) and the carcass of the tire (10), and wherein the zigzag belt (58) has an axial width that is less than the axial width of the first and the second working belt (54, 56).

2. The tire of claim 1 wherein the axial width of the rubber spacer layer (60, 80) is equal to the axial width of the zigzag belt (58) or is in a range of from 95% to 105% of the axial width of the zigzag belt (58).

3. The tire of claim 1 or 2 wherein the axial width of the rubber spacer layer (60, 80) is less than the axial width of the zigzag belt (58).

4. The tire of at least one of the previous claims wherein the gauge or radial thickness of the rubber spacer layer (60, 80) varies in the axial direction.

5. The tire of claim 4 wherein the gauge or radial thickness of the rubber spacer layer (60, 80) varies in a range of 1.5 mm to 4 mm, preferably 1.5 mm to 3 mm, across the axial width of the rubber spacer layer (60, 80).

6. The tire of claim 4 or 5 wherein the gauge or radial thickness of the rubber spacer layer (60, 80) has a maximum in the center of the tread (12) or at an axial distance in a range of from 0 to 30 mm center of the tread (12), and/or wherein the gauge or radial thickness of the rubber spacer layer (60, 80) decreases from the center of the tread (12) towards the lateral belt edges either continuously or stepwise.

7. The tire of at least one of the previous claims wherein the first and second working belts (54, 56) comprise extensible reinforcement cords.

8. The tire of at least one of the previous claims, wherein the zigzag belt (58) comprises extensible reinforcement cords or relatively high elongation reinforcement cords.

9. The tire of at least one of the previous claims wherein the belt structure (50) has only three belts.

10. The tire of at least one of the previous claims wherein the belt structure (50) further includes an overlay belt (90) as the radially outermost belt of the belt structure (50).

11. The tire of at least one of the previous claims wherein the tire is a truck tire and designed for mounting on a 22.5 inch rim.

## Patentansprüche

1. Reifen zur Verwendung auf Lastkraftwagen, wobei der Reifen eine Lauffläche (12), Flanken, eine Karkasse, ein Paar Wülste sowie eine Gürtelstruktur (50) besitzt, die in der radialen Richtung unterhalb der Lauffläche (12) angebracht ist, wobei die Gürtelstruktur (50) einen ersten Arbeitsgürtel (54) und einen zweiten Arbeitsgürtel (56) umfasst, wobei der erste Arbeitsgürtel (54) in der radialen Richtung unterhalb des zweiten Arbeitsgürtels (56) angebracht ist, wobei der Winkel, der durch den ersten und den zweiten Arbeitsgürtel (54, 56) gebildet wird, in einem Bereich von 10 Grad bis 50 Grad in Bezug auf die Umfangsrichtung liegt, wobei ein Zickzack-Gürtel (58) in der radialen Richtung unterhalb des ersten Arbeitsgürtels (54) oder zwischen dem ersten Arbeitsgürtel (54) und dem zweiten Arbeitsgürtel (56) angebracht ist, wobei eine Abstandschicht aus Kautschuk (60, 80) zwischen dem Zickzack-Gürtel (58) und der Karkasse des Reifens (10) oder zwischen dem ersten Arbeitsgürtel (54) und der Karkasse des Reifens (10) angebracht ist, und wobei der Zickzack-Gürtel (58) eine axiale Breite besitzt, die kleiner ist als die axiale Breite des ersten und des zweiten Arbeitsgürtels (54, 56).

2. Reifen nach Anspruch 1, wobei die axiale Breite der Abstandschicht aus Kautschuk (60, 80) gleich der axialen Breite des Zickzack-Gürtels (58) ist oder in einem Bereich von 95 % bis 105 % der axialen Breite des Zickzack-Gürtels (58) liegt.

3. Reifen nach Anspruch 1 oder 2, wobei die axiale Breite der Abstandsschicht aus Kautschuk (60, 80) kleiner ist als die axiale Breite des Zickzack-Gürtels (58).

4. Reifen nach mindestens einem der vorhergehenden Ansprüche, wobei die Stärke oder die radiale Dicke der Abstandsschicht aus Kautschuk (60, 80) in der axialen Richtung variiert.

5. Reifen nach Anspruch 4, wobei die Stärke oder die radiale Dicke der Abstandsschicht aus Kautschuk (60, 80) in einem Bereich von 1,5 mm bis 4 mm, vorzugsweise 1,5 mm bis 3 mm, über die axiale Breite der Abstandsschicht aus Kautschuk hinweg variiert.

6. Reifen nach Anspruch 4 oder 5, wobei die Stärke oder die radiale Dicke der Abstandschicht aus Kautschuk (60, 80) einen Maximalwert in der Mitte der Lauffläche (12) oder in einem axialen Abstand in einem Bereich von 0 bis 30 mm in Bezug auf die Mitte der Lauffläche (12) hat, und/oder wobei die Stärke oder die radiale Dicke der Abstandsschicht aus Kautschuk (60, 80) in Richtung der seitlichen Kanten des Gürtels von dem Zentrum der Lauffläche (12) aus entweder kontinuierlich oder progressiv abnimmt.

7. Reifen nach mindestens einem der vorhergehenden Ansprüche, wobei der erste und der zweite Arbeitsgürtel (54, 56) dehnbare Verstärkungskorde umfassen.

8. Reifen nach mindestens einem der vorhergehenden Ansprüche, wobei der Zickzackgürtel (58) dehnbare Verstärkungskorde oder Verstärkungskorde umfasst, die eine relativ hohe Dehnung aufweisen.

9. Reifen nach mindestens einem der vorhergehenden Ansprüche, wobei die Gürtelstruktur (50) nur drei Gürtel besitzt.

10. Reifen nach mindestens einem der vorhergehenden Ansprüche, wobei die Gürtelstruktur (50) zusätzlich einen Gürtel in der Form eines Deckgürtels (90) als radial äußersten Gürtel der Gürtelstruktur (50) umfasst.

11. Reifen nach mindestens einem der vorhergehenden Ansprüche, wobei der Reifen ein LKW-Reifen ist und für die Montage auf einer 22,5-Zoll-Felge vorgesehen ist.

## Revendications

1. Bandage pneumatique pour son utilisation sur des camions, dans lequel le bandage pneumatique possède une bande de roulement (12), des flancs, une carcasse, une paire de talons, ainsi qu'une structure de ceintures (50) qui est disposée, dans la direction radiale, au-dessous de la bande de roulement (12), dans lequel la structure de ceintures (50) comprend une première ceinture de travail (54) et une deuxième ceinture de travail (56), dans lequel la première ceinture de travail (54) est disposée, dans la direction radiale, au-dessous de la deuxième ceinture de travail (56), dans lequel l'angle formé par la première et la deuxième ceinture de travail (54, 56) se situe dans la plage allant de 10 degrés à 50 degrés par rapport à la direction circonférentielle, dans lequel une ceinture en zigzag (58) est disposée, dans la direction radiale, au-dessous de l'intérieur de la première ceinture de travail (54) ou entre la première ceinture de travail (54) et la deuxième ceinture de travail (56), dans lequel une couche à base de caoutchouc sous la forme d'une entretoise (60, 80) est disposée entre la ceinture en zigzag (58) et la carcasse du bandage pneumatique(10) ou entre la première ceinture de travail (54) et la carcasse du bandage pneumatique (10), et dans lequel la ceinture en zigzag (58) possède une largeur axiale qui est inférieure à la largeur axiale de la première et de la deuxième ceinture de travail (54, 56).

2. Bandage pneumatique selon la revendication 1, dans lequel la largeur axiale de la couche à base de caoutchouc sous la forme d'une entretoise (60, 80) est égale à la largeur axiale de la ceinture en zigzag (58) ou se situe dans une plage allant de 95 % à 105 % de la largeur axiale de la ceinture en zigzag (58).

3. Bandage pneumatique selon la revendication 1 ou 2, dans laquelle la largeur axiale de la couche à base de caoutchouc sous la forme d'une entretoise (60, 80) est inférieure à la largeur axiale de la ceinture en zigzag (58).

4. Bandage pneumatique selon au moins une des revendications précédentes, dans lequel l'épaisseur proprement dite ou l'épaisseur radiale de la couche à base de caoutchouc sous la forme d'une entretoise (60, 80) varie dans la direction axiale.

5. Bandage pneumatique selon la revendication 4, dans lequel l'épaisseur proprement dite ou l'épaisseur radiale de la couche à base de caoutchouc sous la forme d'une entretoise (60, 80) varie dans une plage allant de 1,5 mm à 4 mm, de préférence de 1,5 mm à 3 mm, sur la largeur axiale de la couche à base de caoutchouc sous la forme d'une entretoise (60, 80).

6. Bandage pneumatique selon la revendication 4 ou 5, dans lequel l'épaisseur proprement dite ou l'épaisseur radiale de la couche à base de caoutchouc sous la forme d'une entretoise (60, 80) possède une valeur maximale au centre de la bande de roulement (12) ou à une distance axiale qui se situe dans une plage allant de 0 à 30 mm par rapport au centre de la bande de roulement (12), et/ou dans lequel l'épaisseur proprement dite ou l'épaisseur radiale de la couche à base de caoutchouc sous la forme d'une entretoise (60, 80) diminue à partir du centre de la bande de roulement (12) en direction des bords latéraux de la ceinture, que ce soit de manière continue ou de manière progressive.

7. Bandage pneumatique selon au moins une des revendications précédentes, dans lequel la première et la deuxième ceinture de travail (54, 56) comprennent des câblés de renforcement extensibles.

8. Bandage pneumatique selon au moins une des revendications précédentes, dans lequel la ceinture en zigzag (58) comprend des câblés de renforcement extensibles ou des câblés de renforcement qui possèdent un allongement relativement élevé.

9. Bandage pneumatique selon au moins une des revendications précédentes, dans lequel la structure de ceintures (50) possède uniquement trois ceintures.

10. Bandage pneumatique selon au moins une des revendications précédentes, dans lequel la structure de ceintures (50) englobe en outre une ceinture sous la forme d'une nappe de protection (90) qui représente la ceinture de la structure de ceintures (50), la plus externe dans la direction radiale.

11. Bandage pneumatique selon au moins une des revendications précédentes, dans lequel le bandage pneumatique est un bandage pneumatique pour camions et est conçu pour son montage sur une jante de 22,5 pouces.
